# EUROPEAN PATENT APPLICATION

(11) **EP 3 346 686 A1**
(43) Date of publication of application: **11.07.2018**
(21) Application number: 17168018.4
(22) Date of filing: 25.04.2017
(51) Int. Cl.: H04N 1/387, B33Y 50/02, B29C 64/386

(54) **IMAGE FILE TRANSFORM METHOD AND THREE-DIMENSIONAL PRINTING SYSTEM**

(30) Priority: 05.01.2017 TW 106100345
(71) Applicant: XYZprinting, Inc., New Taipei City 22201 (TW); Kinpo Electronics, Inc., New Taipei City 22201 (TW)
(72) Inventor: Yuan, Kuo-Yen, 22201 Shenkeng Dist., New Taipei City (TW); Hsieh, Hsin-Ta, 22201 Shenkeng Dist., New Taipei City (TW)
(74) Representative: 2K Patentanwälte Blasberg Kewitz & Reichel

(57) **Abstract**

An image file transform method and a three-dimensional (3D) printing system are provided. The method includes: analyzing a first slicing image file having a first size to obtain a valid region in the first slicing image file; performing an image file transform operation on the first slicing image file according to the valid region to generate a second slicing image file having a second size, wherein the second slicing image file includes the valid region, and the second size is smaller than the first size; and setting an index for the second slicing image file according to the image file transform operation, wherein the index is used for a 3D printing apparatus to set a printing start point corresponding to the second slicing image file. Therefore, a storage efficiency of slicing image files for 3D printing is improved.

## Description

### BACKGROUND OF THE INVENTION

### [Field of the Invention]

The invention relates to a file management mechanism, and in particular, an image file transform method and a three-dimensional (3D) printing system.

### [Description of Related Art]

Generally speaking, to complete a printing task of a 3D object by a 3D printing apparatus (e.g., a 3D printer), a model of the 3D object is sliced into a plurality of printing layers, and each of the printing layers corresponds to at least one image file (also referred to as a slicing image file). Each image file is used to describe a movement region of a print head of the 3D printing apparatus corresponding to a printing layer and/or color configuration of the printing layer. For example, in a CMYK color model, one printing layer corresponds to a cyan (C) image file, a magenta (M) image file, a yellow (Y) image file, and a key (or blocK; K) image file. Accordingly, the 3D printing apparatus can complete the 3D printing task of each printing layer one after another according to the image files.

However, in the current mechanism, the size of the image file corresponding to each printing layer is fixed. Therefore, in order to complete more printing tasks, the number of the image files required by the 3D printing apparatus will constantly increase, which is likely to use up the storage capacity for storing the image files.

### SUMMARY OF THE INVENTION

In light of the above, the invention provides an image file transform method and a 3D printing system for enhancing storage efficiency of image files for 3D printing.

An embodiment of the invention provides an image file transform method adapted for a 3D printing system including a 3D printing apparatus and a storage device. The storage device stores a plurality of slicing image files. The plurality of slicing image files are obtained by performing a slicing operation on a 3D model of a 3D object. The image file transform method includes: analyzing a first slicing image file among the plurality of slicing image files to obtain a valid region in the first slicing image file, wherein the first slicing image file has a first size; performing an image file transform operation on the first slicing image file according to the valid region to generate a second slicing image file having a second size, wherein the second slicing image file includes the valid region, and the second size is smaller than the first size; and setting an index for the second slicing image file according to the image file transform operation, wherein the second slicing image file is used for the 3D printing apparatus to perform a 3D printing operation corresponding to a first printing layer of the 3D object, and the index is used for the 3D printing apparatus to set a printing start point corresponding to the second slicing image file.

In an embodiment of the invention, the image file transform method further includes: moving a print head to the printing start point by the 3D printing apparatus according to the index; and performing the 3D printing operation corresponding to the first printing layer by the 3D printing apparatus from the printing start point according to the second slicing image file.

Another embodiment of the invention provides a 3D printing system including a storage device, a 3D printing apparatus, and a processor. The storage device is configured to store a plurality of slicing image files and a plurality of modules. The plurality of slicing image files are obtained by performing a slicing operation on a 3D model of a 3D object. The 3D printing apparatus is coupled to the storage device. The processor is coupled to the storage device and is configured to execute the plurality of modules to: analyze a first slicing image file among the plurality of slicing image files to obtain a valid region in the first slicing image file, wherein the first slicing image file has a first size; perform an image file transform operation on the first slicing image file according to the valid region to generate a second slicing image file having a second size, wherein the second slicing image file includes the valid region, and the second size is smaller than the first size; and set an index for the second slicing image file according to the image file transform operation, wherein the second slicing image file is used for the 3D printing apparatus to perform a 3D printing operation corresponding to the first printing layer of the 3D object, and the index is used for the 3D printing apparatus to set a printing start point corresponding to the second slicing image file.

In an embodiment of the invention, the image file transform operation includes: determining a cutting boundary of the first slicing image file according to at least one end point of the valid region; and generating the second slicing image file according to the cutting boundary, wherein the second slicing image file does not include at least a partial region of an invalid region in the first slicing image file.

In an embodiment of the invention, the cutting boundary divides the first slicing image file into a retained region and a cut region, wherein the valid region is located in the retained region, and the step of generating the second slicing image file according to the cutting boundary includes: retaining file content corresponding to the retained region in the first slicing image file and removing file content corresponding to the cut region from the first slicing image file.

In an embodiment of the invention, the retained region is a rectangular region.

In an embodiment of the invention, the second size is positively correlated with a ratio of an area of the valid region occupied in the first slicing image file.

In an embodiment of the invention, the first slicing image file and the second slicing image file both correspond to the first printing layer of the 3D object, and a contour of the valid region corresponds to a contour of the 3D object at the first printing layer.

In an embodiment of the invention, the 3D printing apparatus includes a controller and a print head, and the controller is coupled to the print head. The controller is configured to control the print head to move to the printing start point according to the index and perform the 3D printing operation corresponding to the first printing layer from the printing start point according to the second slicing image file.

In an embodiment of the invention, the 3D printing operation corresponding to the first printing layer includes controlling the print head to move according to the valid region.

In an embodiment of the invention, the step of moving the print head to the printing start point according to the index includes: determining an alternative reference point corresponding to the second slicing image file according to the index; and calculating a moving path for moving the print head to the printing start point according to the alternative reference point.

In an embodiment of the invention, a file size of the second slicing image file is smaller than a file size of the first slicing image file.

In light of the above, the invention analyzes the first slicing image file to detect the valid region in the first slicing image file, and performs the image file transform operation on the first slicing image file according to the valid region to generate the second slicing image file having a smaller size, wherein the second slicing image file also includes the valid region. Moreover, the invention further sets the index for the second slicing image file according to the image file transform operation, wherein the index is used for the 3D printing apparatus to set the printing start point corresponding to the second slicing image file. Accordingly, without affecting the 3D printing operations performed by the 3D printing apparatus, the invention enhances storage efficiency of the image files for 3D printing.

### BRIEF DESCRIPTION OF THE DRAWINGS

FIG. 1 and FIG. 2 are schematic diagrams illustrating a three-dimensional (3D) printing system according to an embodiment of the invention.
FIG. 3A to FIG. 3C are schematic diagrams illustrating an image file transform operation according to an embodiment of the invention.
FIG. 4A to FIG. 4C are schematic diagrams illustrating an image file transform operation according to another embodiment of the invention.
FIG. 5A is a schematic diagram illustrating performing a 3D printing operation according to a first slicing image file according to an embodiment of the invention.
FIG. 5B is a schematic diagram illustrating performing a 3D printing operation according to a second slicing image file according to an embodiment of the invention.
FIG. 5C is a schematic diagram illustrating performing a 3D printing operation according to the second slicing image file according to another embodiment of the invention.
FIG. 6 is a flowchart illustrating an image file transform method according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

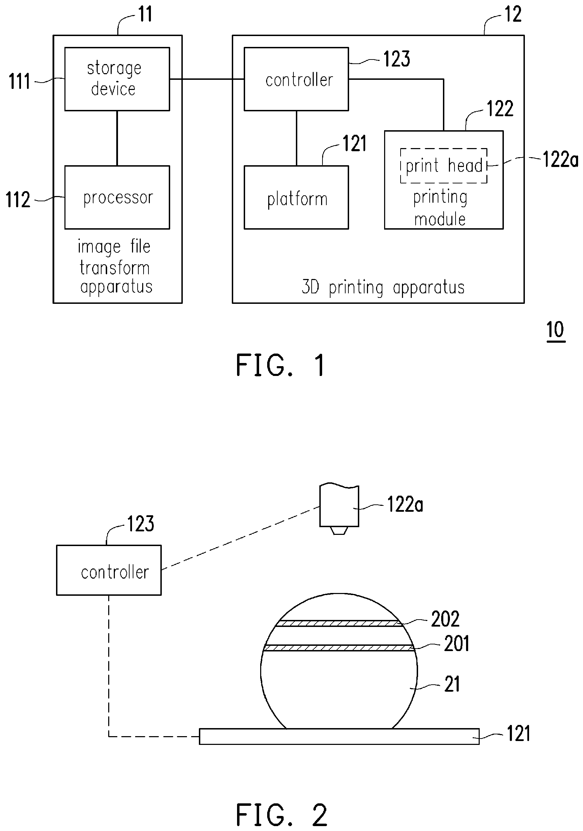

FIG. 1 and FIG. 2 are schematic diagrams illustrating a three-dimensional (3D) printing system according to an embodiment of the invention. Referring to FIG. 1 and FIG. 2, a 3D printing system 10 includes an image file transform apparatus 11 and a 3D printing apparatus 12. The image file transform apparatus 11 is coupled to the 3D printing apparatus 12. The image file transform apparatus 11 is an electronic apparatus having data transmission, storage, and processing functions, such as a smartphone, a tablet computer, a desktop computer, a laptop, and an industrial computer. In an embodiment, the image file transform apparatus 11 is a host of the 3D printing apparatus 12, and the 3D printing apparatus 12 is controlled by the image file transform apparatus 11 to perform 3D printing operations. In an embodiment, the image file transform apparatus 11 is not the host of the 3D printing apparatus 12. For example, in an embodiment, the 3D printing apparatus 12 (only) needs to read required image file information from the image file transform apparatus 11 and then can automatically perform the corresponding 3D printing operations. Moreover, a number of the image file transform apparatus 11 and a number of the 3D printing apparatus 12 may respectively be one or more.

The image file transform apparatus 11 includes a storage device 111 and a processor 112. The storage device 111 is configured to store data and may be a buffer memory, internal storage media, external storage media, a storage device of another type, or a combination of the foregoing devices. For example, the buffer memory may include a random access memory, a read-only memory, or another similar device. For example, the internal storage media may include a hard disk drive (HDD), a solid state disk (SSD), a flash storage device, or another similar device. For example, the external storage media may include an external hard drive, a USB drive, a cloud drive, or another similar device.

The processor 112 is coupled to the storage device 111 and is configured to access the storage device 111. The processor 112 controls operation of components in the image file transform apparatus 11. The processor 112 is a central processing unit (CPU) or a programmable microprocessor for general or specific purposes, a digital signal processor (DSP), a programmable controller, an application specific integrated circuit (ASIC), a programmable logic device (PLD), another similar processing device, or a combination of the foregoing devices. In an embodiment, the processor 112 sends specific commands to instruct the 3D printing apparatus 12 (or the entire 3D printing system 10) to perform the 3D printing operations.

The 3D printing apparatus 12 includes a platform 121, a printing module 122, and a controller 123. The platform 121 and the printing module 122 are both coupled to the controller 123. The printing module 122 includes a print head 122a and is disposed above the platform 121 to perform the 3D printing operations. It shall be noted that people ordinarily skilled in the art shall understand that the printing module 122 may further include other components (e.g., a supply pipeline, a print head linking mechanism, etc.) that work with the print head 122a to complete the 3D printing operations, which is not described in detail here. Specifically, when the 3D printing operations are performed, the print head 122a starts printing layer by layer from a bottom-most layer of a 3D object 21 and gradually forms the 3D object 21 on a bearing surface of the platform 121. Moreover, in the 3D printing operations, the print head 122a moves in changeable directions above the platform 121 and feeds a forming material in a molten state. Afterwards, the forming material is solidified layer by layer on the platform 121 and then forms the 3D object 21. In an embodiment, the print head 122a also feeds a dye (or ink).

The controller 123 is configured to control the print head 122a to move and feed the forming material. For example, the controller 130 is a CPU or a programmable microprocessor for general or specific purposes, a digital signal processor, a programmable controller, an application specific integrated circuit, a programmable logic device, another similar processing device, or a combination of the foregoing devices.

In the present embodiment, the storage device 111 stores a plurality of image files (also referred to as slicing image files). The plurality of image files are obtained by performing a slicing operation on a 3D model of the 3D object 21. The controller 123 performs the 3D printing operations corresponding to the 3D model according to the image files stored in the storage device 111. In the present embodiment, the image files conform to a CMYK color model. For example, one image file stored in the storage device 111 may be a cyan (C) image file, a magenta (M) image file, a yellow (Y) image file, and a key (or block; K) image file. Moreover, in another embodiment, the image files stored in the storage device 111 may conform to other color models such as an RGB color model. Taking printing a printing layer 201 and a printing layer 202 of the 3D object 21 as an example, the controller 130 controls the print head 122a to perform the 3D printing operation corresponding to the printing layer 201 according to at least one image file corresponding to the printing layer 201 in the storage device 111. After the 3D printing operation corresponding to the printing layer 201 is completed, the controller 130 controls the print head 122a to perform the 3D printing operations corresponding to the printing layer 202 and other printing layers according to other image files in the storage device 111. In addition, in another embodiment, the image files may also be slicing image files that conform to other 3D printing standards.

In the present embodiment, the processor 112 selects one image file (also referred to as a first slicing image file) from the storage device 111, and the first slicing image file has a size (also referred to as a first size). The processor 112 analyzes the first slicing image file to obtain a valid region in the first slicing image file. The processor 112 performs an image file transform operation on the first slicing image file according to the valid region to generate another image file (also referred to as a second slicing image file) having another size (also referred to as a second size). Specifically, the second slicing image file also includes the valid region, and the second size is smaller than the first size.

It shall be noted that the size mentioned above refers to the size of the image file itself. For example, the size may be represented by a length of the image file multiplied by a width (e.g., 1024 x 2048). Moreover, the size of the image file is positively correlated with a file size of the image file and/or a number of pixels contained in the image file. In other words, in an embodiment, a file size of the second slicing image file is smaller than a file size of the first slicing image file, and/or a number of pixels contained in the second slicing image file is smaller than a number of pixels contained in the first slicing image file. In an embodiment, the processor 112 stores the second slicing image file back to the storage device 111 to replace the first slicing image file in the storage device 111. In other words, after the second slicing image file is generated, the first slicing image file may be deleted. In addition, in an embodiment, the processor 112 stores the second slicing image file to another storage location in the storage device 111.

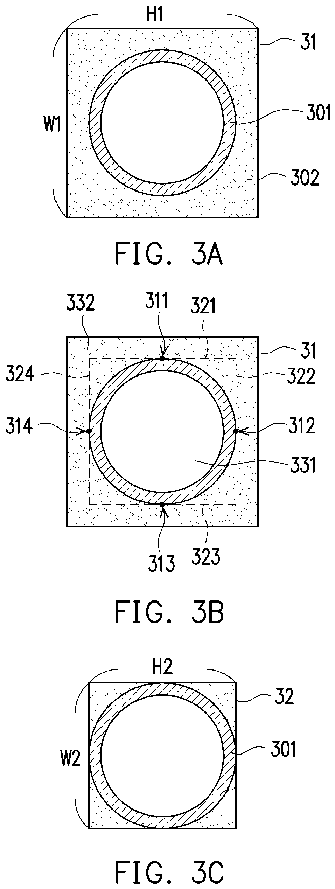

FIG. 3A to FIG. 3C are schematic diagrams illustrating an image file transform operation according to an embodiment of the invention. Referring to FIG. 2 and FIG. 3A, an image file 31 corresponds to the printing layer 201. For example, the image file 31 may be an image file corresponding to a color in the CMYK color model. In an embodiment, if the image file transform operation is not performed on the image file 31, the controller 130 may control the print head 122a according to the image file 31 to perform the 3D printing operation corresponding to the printing layer 201.

In the present embodiment, the image file 31 includes a valid region 301 (marked in slant lines) and an invalid region 302 (marked as dotted). A contour of the valid region 301 corresponds to a contour of the 3D object 21 at the printing layer 201. More specifically, the valid region 301 is used to indicate a region where the print head 122a needs to feed the forming material and/or a region where a dye needs to be feed to color the forming material when the 3D printing operation corresponding to the printing layer 201 is performed. For example, in the present embodiment, the valid region 301 is in a shape of a hollow circle, which means that in the 3D printing operation corresponding to the printing layer 201, a region where the print head 122a feeds the forming material and/or the dye is also in a shape of a hollow circle.

Referring to FIG. 3B, the processor 112 detects the valid region 301 in the image file 31. For example, the processor 112 may identify the valid region 301 in the image file 31 through image analysis techniques. Next, the processor 112 performs the image file transform operation on the image file 31 according to the detected valid region 301 to reduce the size of the image file 31. For example, after the valid region 301 is obtained, the processor 112 detects at least one end point of the valid region 301 and determines at least one cutting boundary of the image file 31 according to the detected end point. It shall be noted that the cutting boundary is used to determine the file content to be retained and the file content that is removable in the image file 31 in the image file transform operation on the image file 31. Moreover, the cutting boundary also corresponds to a reduced size of the image file 31.

Taking FIG. 3B as an example, the processor 112 detects end points 311 to 314 of the valid region 301 and determines cutting boundaries 321 to 324 of the image file 31 according to the end points 311 to 314. Specifically, the cutting boundary 321 is determined according to the end point 311, the cutting boundary 322 is determined according to the end point 312, the cutting boundary 323 is determined according to the end point 313, and the cutting boundary 324 is determined according to the end point 314. The cutting boundaries 321 to 324 divide the image file 31 into a retained region 331 and a cut region 332. For example, the retained region 331 is a rectangular region encircled by the cutting boundaries 321 to 324, and the valid region 301 is located in the retained region 331. More specifically, the retained region 331 includes the complete valid region 301. Moreover, the retained region 331 may also include a partial region in the invalid region 302, as shown in FIG. 3B.

It shall be noted that in the embodiment of FIG. 3B, the cutting boundaries 321 to 324 are respectively located on the end points 311 to 314 (namely, the cutting boundaries 321 to 324 respectively contact the end points 311 to 314). However, in another embodiment, at least one of the cutting boundaries 321 to 324 may also expand outward for a predetermined distance so that an encircled region of the cutting boundaries 321 to 324 still include the compete valid region 301 but the expanded cutting boundaries do not contact the corresponding end points.

Referring to FIG. 3B and FIG. 3C, the processor 112 generates an image file 32 according to the cutting boundaries 321 to 324. For example, after the cutting boundaries 321 to 324 are determined, the processor 112 retains file content corresponding to the retained region 331 in the image file 31 and removes file content corresponding to the cut region 332 from the image file 31 to thereby generate the image file 32. Compared with the image file 31, the image file 32 includes the complete valid region 301 in the image file 31 but does not include at least a partial region of the invalid region 302 in the image file 31. In other words, after a part of the file content is removed from the image file 31, a size of the image file 32 is smaller than the size of the image file 31, and a file size of the image file 32 is also smaller than the file size of the image file 31. After the image file 32 is stored back to the storage device 111, the controller 130 may control the print head 122a according to the image file 32 to perform the 3D printing operation corresponding to the printing layer 201.

It shall be noted that in the embodiment of FIG. 3A to FIG. 3C, the image file 31 and the image file 32 are both rectangular image files. Therefore, the size of the image file 32 being smaller than the size of the image file 31 may mean that a long edge length H2 of the image file 32 is less than a long edge length H1 of the image file 31, a short edge length W2 of the image file 32 is less than a short edge length W1 of the image file 31, and/or a diagonal length of the image file 32 is less than a diagonal length of the image file 31, etc. Moreover, a number of pixels contained in the image file 32 is smaller than a number of pixels contained in the image file 31. It shall be noted that in an embodiment of FIG. 3A to FIG. 3C, the performed image file transform operation does not include conversion of a file format. Therefore, the file formats of the image file 31 and the image file 32 are identical, and the image file 31 and the image file 32 are both adapted for the 3D printing apparatus 12 to perform the 3D printing operation corresponding to the printing layer 201.

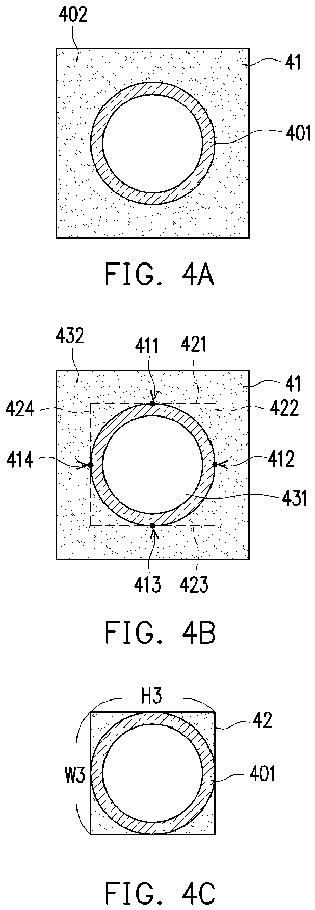

FIG. 4A to FIG. 4C are schematic diagrams illustrating an image file transform operation according to another embodiment of the invention. Referring to FIG. 2 and FIG. 4A, an image file 41 corresponds to the printing layer 202. A size of the image file 41 is identical to the size of the image file 31 in FIG. 3A. For example, the sizes of the image files 31 and 41 are both the same predetermined size. In an embodiment, if the image file transform operation is not performed on the image file 41, the controller 130 may control the print head 122a according to the image file 41 to perform the 3D printing operation corresponding to the printing layer 202. In the present embodiment, the image file 41 includes a valid region 401 (marked in slant lines) and an invalid region 402 (marked as dotted). A contour of the valid region 401 corresponds to a contour of the 3D object 21 at the printing layer 202.

Referring to FIG. 4B, the processor 112 detects the valid region 401 in the image file 41. Next, the processor 112 performs the image file transform operation on the image file 41 according to the detected valid region 401 to reduce the size of the image file 41. For example, the processor 112 may detect end points 411 to 414 of the valid region 401 and determine cutting boundaries 421 to 424 of the image file 41 according to the end points 411 to 414. The cutting boundaries 421 to 424 divide the image file 41 into a retained region 431 and a cut region 432. Specifically, the retained region 431 is a rectangular region encircled by the cutting boundaries 421 to 424, and the retained region 431 includes the complete (or entire) valid region 401. It shall be noted that in another embodiment, at least one of the cutting boundaries 421 to 424 may also not contact the corresponding end points among the end points 411 to 414.

Referring to FIG. 4B and FIG. 4C, the processor 112 retains file content corresponding to the retained region 431 in the image file 41 and removes file content corresponding to the cut region 432 from the image file 41 to thereby generate an image file 42. The image file 42 includes the complete valid region 401 in the image file 41 but does not include at least a partial region of the invalid region 402 in the image file 41. In other words, after at least a part of the file content is removed from the image file 41, a size of the image file 42 is smaller than the size of the image file 41, and a file size of the image file 42 is also smaller than a file size of the image file 41. Moreover, a number of pixels contained in the image file 42 is smaller than a number of pixels contained in the image file 41. After the image file 42 is stored back to the storage device 111, the controller 130 may control the print head 122a according to the image file 42 to perform the 3D printing operation corresponding to the printing layer 202. It shall be noted that in an embodiment of FIG. 4A to FIG. 4C, the performed image file transform operation does not include conversion of a file format. Therefore, the file formats of the image file 41 and the image file 42 are identical, and the image files 41 and 42 are both adapted for the 3D printing apparatus 12 to perform the 3D printing operation corresponding to the printing layer 202.

In an embodiment, the size (i.e., the second size) of the second slicing image file is positively correlated with a ratio of an area of the valid region in the first slicing image file occupied in the first slicing image file. The higher the ratio of the area of the valid region in the first slicing image file occupied in the first slicing image file is, the greater the size of the generated second slicing image file is. For example, in the foregoing embodiment, since a ratio of an area of the valid region 301 occupied in the image file 31 is higher than a ratio of an area of the valid region 401 occupied in the image file 41, the size of the image file 32 is greater than the size of the image file 42. From another perspective, the size of the second slicing image file is also positively correlated with an area of the retained region in the first slicing image file. For example, in the foregoing embodiment, since an area of the retained region 331 is greater than an area of the retained region 431, the size of the image file 32 is greater than the size of the image file 42. It shall be noted that the size of the image file 32 being greater than the size of the image file 42 may mean that a long edge length H2 of the image file 32 is greater than a long edge length H3 of the image file 42, a short edge length W2 of the image file 32 is greater than a short edge length W3 of the image file 42, and/or a diagonal length of the image file 32 is greater than a diagonal length of the image file 42, etc.

In the present embodiment, the processor 112 further sets an index for the second slicing image file according to the performed image file transform operation, wherein the index is used for the 3D printing apparatus 12 to set a printing start point corresponding to the second slicing image file. For example, the index is recorded in an index table in the storage device 111. When the 3D printing apparatus 12 performs the 3D printing operation corresponding to a printing layer (also referred to as a first printing layer) according to the second slicing image file, the controller 123 reads the index corresponding to the second slicing image file from the index table and moves the print head 122a to the corresponding printing start point according to the index. Next, the 3D printing apparatus 12 performs the 3D printing operation corresponding to the first printing layer from the printing start point according to the second slicing image file. Accordingly, even if the size of an image file is different from the predetermined size, the 3D printing apparatus 12 can still successfully perform the corresponding 3D printing operation.

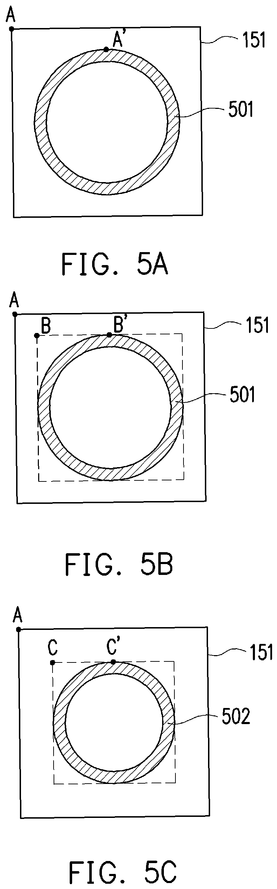

FIG. 5A is a schematic diagram illustrating performing a 3D printing operation according to the first slicing image file according to an embodiment of the invention. It shall be noted that the attached FIG. 5A to FIG. 5C are top views of a platform 151, and the platform 151 is identical or similar to the platform 121 of FIG. 2. Referring to FIG. 2, FIG. 3A, and FIG. 5A, if the controller 123 performs the 3D printing operation corresponding to the printing layer 201 according to the image file 31 (i.e., the first slicing image file), the controller 123 may calculate a moving path according to the image file 31 and a predetermined reference point A of the 3D printing apparatus 12 and move the print head 122a to a printing start point A' corresponding to the printing layer 201 according to the moving path. For example, if the print head 122a is currently at the predetermined reference point A, the moving path refers to a moving path from the predetermined reference point A to the printing start point A'. Alternatively, if the print head 122a is currently not at the predetermined reference point A, the moving path refers to a moving path from a current position of the print head 122a to the printing start point A'. After the print head 122a is moved to the printing start point A', the controller 123 may control the print head 122a to move in a printing region 501 (marked in slant lines) according to the valid region 301 in the image file 31 and perform the corresponding 3D printing operation such as feeding the forming material and/or the dye.

FIG. 5B is a schematic diagram illustrating performing a 3D printing operation according to the second slicing image file according to an embodiment of the invention. Referring to FIG. 2, FIG. 3C, and FIG. 5B, if the controller 123 performs the 3D printing operation corresponding to the printing layer 201 according to the image file 32 (i.e., the second slicing image file), when reading the image file 32, the controller 123 also reads the index corresponding to the image file 32. According to the index corresponding to the image file 32, the controller 123 determines an alternative reference point B corresponding to the image file 32. For example, the index corresponding to the image file 32 may indicate a position coordinate of the alternative reference point B, or indicate a distance and relative direction between the alternative reference point B and the predetermined reference point A. Next, the controller 123 calculates a moving path according to the image file 32 and the alternative reference point B and moves the print head 122a to a printing start point B' corresponding to the printing layer 201 according to the moving path. It shall be noted that a position of the printing start point B' may be identical to or different from a position of the printing start point A' in FIG. 5A. After the print head 122a is moved to the printing start point B', the controller 123 controls the print head 122a to move in the printing region 501 (marked in slant lines) according to the valid region 301 in the image file 32 and performs the corresponding 3D printing operation such as feeding the forming material and/or the dye.

FIG. 5C is a schematic diagram illustrating performing a 3D printing operation according to the second slicing image file according to another embodiment of the invention. Referring to FIG. 2, FIG. 4C, and FIG. 5C, if the controller 123 performs the 3D printing operation corresponding to the printing layer 202 according to the image file 42 (i.e., the second slicing image file), when reading the image file 42, the controller 123 also reads the index corresponding to the image file 42. According to the index corresponding to the image file 42, the controller 123 determines an alternative reference point C corresponding to the image file 42. For example, the index corresponding to the image file 42 may indicate a position coordinate of the alternative reference point C, or indicate a distance and relative direction between the alternative reference point C and the predetermined reference point A. Next, the controller 123 calculates a moving path according to the image file 42 and the alternative reference point C and moves the print head 122a to the printing start point C' according to the moving path. It shall be noted that a position of the alternative reference point C is different from the position of the alternative reference point B in FIG. 5B, and a position of the printing start point C' is different from the position of the printing start point B' in FIG. 5B. After the print head 122a is moved to the printing start point C', the controller 123 controls the print head 122a to move in a printing region 502 (marked in slant lines) according to the valid region 401 in the image file 42 and performs the corresponding 3D printing operation such as feeding the forming material and/or the dye.

It shall be noted that in another embodiment of FIG. 5A, FIG. 5B, and/or FIG. 5C, the predetermined reference point A of the 3D printing apparatus 12, and the printing start points A', B', and C' may all be set at other positions above the platform 151, as long as they can serve as reference for the 3D printing apparatus 12 to perform the 3D printing operation.

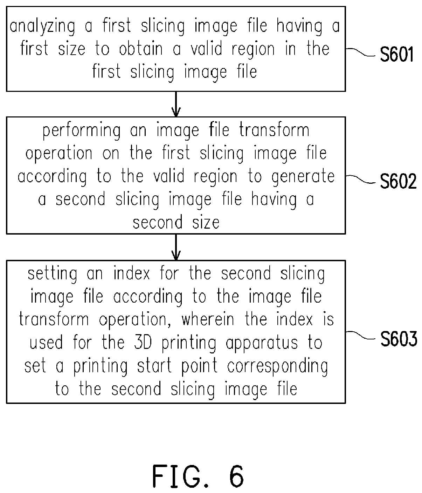

FIG. 6 is a flowchart illustrating an image file transform method according to an embodiment of the invention. Referring to FIG. 6, in step S601, a first slicing image file having a first size is analyzed to obtain a valid region in the first slicing image file. In step S602, an image file transform operation is performed on the first slicing image file according to the valid region to generate a second slicing image file having a second size, wherein the second slicing image file includes the valid region and the second size is smaller than the first size. Moreover, the second slicing image file is used for a 3D printing apparatus to perform a 3D printing operation corresponding to a first printing layer of a 3D object. In step S603, an index is set for the second slicing image file according to the image file transform operation, wherein the index is used for the 3D printing apparatus to set a printing start point corresponding to the second slicing image file.

However, the steps in FIG. 6 have been detailed above and shall not be repeatedly described here. It shall be noted that the steps in FIG. 6 may be implemented as a plurality of program codes or circuits and are not limited in the invention. For example, in an embodiment, the storage device 111 of the image file transform apparatus 11 stores a plurality of modules, and the processor 112 of the image file transform apparatus 11 executes the modules to perform the steps in the image file transform method. Alternatively, in an embodiment, the processor 112 of the image file transform apparatus 11 includes a plurality of circuits, and the circuits are configured to perform the steps in the image file transform method. Moreover, the method of FIG. 6 may be used with the foregoing embodiments or used independently, which is not limited in the invention.

In summary of the above, after selecting an image file, the image file transform apparatus of the invention detects the valid region in the image file and performs the image file transform operation on the first slicing image file according to the valid region to generate a new image file having a smaller size, thereby reducing the file size of the image file. Moreover, the image file transform apparatus further sets an index for the new image file according to the image file transform operation, wherein the index is used for the 3D printing apparatus to set the printing start point corresponding to the new image file. Accordingly, without affecting the printing operations performed by the 3D printing apparatus, the invention enhances storage efficiency of the image files for 3D printing through reducing the size of at least part of the image files. For example, after the size of at least part of the image files is reduced, more image files can be stored in the limited storage capacity in the invention. Moreover, since the size of at least part of the image files is reduced, reading and transmission of the image files may become faster when the 3D printing apparatus performs the 3D printing operation.

## Claims

1. An image file transform method adapted for a three-dimensional (3D) printing system (10) comprising a 3D printing apparatus (12) and a storage device (111), wherein the storage device (111) stores a plurality of slicing image files obtained by performing a slicing operation on a 3D model of a 3D object (21), the image file transform method comprising:
analyzing (S601) a first slicing image file (31, 41) among the plurality of slicing image files to obtain a valid region (301, 401) in the first slicing image file (31, 41), wherein the first slicing image file (31, 41) has a first size;
performing (S602) an image file transform operation on the first slicing image file (31, 41) according to the valid region (301, 401) to generate a second slicing image file (32, 42) having a second size, wherein the second slicing image file (32, 42) comprises the valid region (301, 401), and the second size is smaller than the first size; and
setting an index (S603) for the second slicing image file (32, 42) according to the image file transform operation,
wherein the second slicing image file (32, 42) is used for the 3D printing apparatus (12) to perform a 3D printing operation corresponding to a first printing layer (201, 202) of the 3D object, and the index is used for the 3D printing apparatus (12) to set a printing start point (A', B', C') corresponding to the second slicing image file (32, 42).

2. The image file transform method according to claim 1, wherein the image file transform operation comprises:
determining a cutting boundary (321, 322, 323, 324, 421, 422, 423, 424) of the first slicing image file (31, 41) according to at least one end point (311, 312, 313, 314, 411, 412, 413, 414) of the valid region (301, 401); and
generating the second slicing image file (32, 42) according to the cutting boundary (321, 322, 323, 324, 421, 422, 423, 424), wherein the second slicing image file (32, 42) does not comprise at least a partial region of an invalid region (302, 402) in the first slicing image file (31, 41).

3. The image file transform method according to claim 1 or 2, wherein the cutting boundary (321, 322, 323, 324, 421, 422, 423, 424) divides the first slicing image file (31, 41) into a retained region (331, 431) and a cut region (332, 432), wherein the valid region (301, 401) is located in the retained region (331, 431), and the step of generating the second slicing image file (32, 42) according to the cutting boundary (321, 322, 323, 324, 421, 422, 423, 424) comprises:
retaining file content corresponding to the retained region (331, 431) in the first slicing image file (31, 41); and
removing file content corresponding to the cut region (332, 432) from the first slicing image file (31, 41).

4. The image file transform method according to any of the claims 1 to 3, wherein the second size is positively correlated with a ratio of an area of the valid region (301, 401) occupied in the first slicing image file (31, 41).

5. The image file transform method according to any of the claims 1 to 4, wherein the first slicing image file (31, 41) and the second slicing image file (32, 42) both correspond to the first printing layer (201, 202) of the 3D object (21), and a contour of the valid region (301, 401) corresponds to a contour of the 3D model at the first printing layer (201, 202).

6. The image file transform method according to any of the claims 1 to 5, further comprising:
moving a print head (122a) to the printing start point (A', B', C') by the 3D printing apparatus (12) according to the index; and
performing the 3D printing operation corresponding to the first printing layer (201, 202) by the 3D printing apparatus (12) from the printing start point (A', B', C') according to the second slicing image file (32, 42).

7. The image file transform method according to any of the claims 1 to 6, wherein the 3D printing operation corresponding to the first printing layer (201, 202) comprises controlling the print head (122a) to move according to the valid region (301, 401).

8. The image file transform method according to any of the claims 1 to 7, wherein the step of moving the print head (122a) to the printing start point (A', B', C') according to the index comprises:
determining an alternative reference point (B, C) corresponding to the second slicing image file (32, 42) according to the index; and
calculating a moving path for moving the print head (122a) to the printing start point (A', B', C') according to the alternative reference point (B, C).

9. A 3D printing system (10) comprising:
a storage device (111) for storing a plurality of slicing image files and a plurality of modules, wherein the plurality of slicing image files are obtained by performing a slicing operation on a 3D model of a 3D object (21);
a 3D printing apparatus (12) coupled to the storage device (111); and
a processor (112) coupled to the storage device (111) and configured to execute the plurality of modules to:
analyze a first slicing image file (31, 41) among the plurality of slicing image files to obtain a valid region (301, 401) in the first slicing image file (31, 41), wherein the first slicing image file (31, 41) has a first size;
perform an image file transform operation on the first slicing image file (31, 41) according to the valid region (301, 401) to generate a second slicing image file (32, 42) having a second size, wherein the second slicing image file (32, 42) comprises the valid region (301, 401), and the second size is smaller than the first size; and
set an index for the second slicing image file (32, 42) according to the image file transform operation,
wherein the second slicing image file (32, 42) is used for the 3D printing apparatus (12) to perform a 3D printing operation corresponding to a first printing layer (201, 202) of the 3D object (21), and the index is used for the 3D printing apparatus (12) to set a printing start point (A', B', C') corresponding to the second slicing image file (32, 42).

10. The 3D printing system (10) according to claim 9, wherein the image file transform operation comprises:
determining a cutting boundary (321, 322, 323, 324, 421, 422, 423, 424) of the first slicing image file (31, 41) according to at least one end point (311, 312, 313, 314, 411, 412, 413, 414) of the valid region (301, 401); and
generating the second slicing image file (32, 42) according to the cutting boundary (321, 322, 323, 324, 421, 422, 423, 424), wherein the second slicing image file (32, 42) does not comprise at least a partial region of an invalid region (302, 402) in the first slicing image file (31, 41).

11. The 3D printing system (10) according to claim 10, wherein the cutting boundary (321, 322, 323, 324, 421, 422, 423, 424) divides the first slicing image file (31, 41) into a retained region (331, 431) and a cut region (332, 432), wherein the valid region (301, 401) is located in the retained region (331, 431), and the operation of generating the second slicing image file (32, 42) according to the cutting boundary (321, 322, 323, 324, 421, 422, 423, 424) comprises:
retaining file content corresponding to the retained region (331, 431) in the first slicing image file (31, 41); and
removing file content corresponding to the cut region (332, 432) from the first slicing image file (31, 41).

12. The 3D printing system (10) according to claim 9 or 10, wherein the first slicing image file (31, 41) and the second slicing image file (32, 42) both correspond to the first printing layer (201, 202) of the 3D object (21), and a contour of the valid region (301, 401) corresponds to a contour of the 3D object (21) at the first printing layer (201, 202).

13. The 3D printing system (10) according to any of the claims 9 to 12, wherein the 3D printing apparatus (12) comprises a controller (123) and a print head (122a), and the controller (123) is coupled to the print head (122a),
wherein the controller (123) is configured to control the print head (122a) to move to the printing start point (A', B', C') according to the index and perform the 3D printing operation corresponding to the first printing layer (201, 202) from the printing start point (A', B', C') according to the second slicing image file (32, 42).

14. The 3D printing system (10) according to claim 13, wherein the 3D printing operation corresponding to the first printing layer (201, 202) comprises controlling the print head (122a) to move according to the valid region (301, 401).

15. The 3D printing system (10) according to claim 13 or 14, wherein the operation of moving the print head (122a) to the printing start point (A', B', C') according to the index comprises:
determining an alternative reference point (B, C) corresponding to the second slicing image file (32, 42) according to the index; and
calculating a moving path for moving the print head (122a) to the printing start point (A', B', C') according to the alternative reference point (B, C).
